(19) Europäisches Patentamt
European Patent Office
Office européen des brevets

(11) Veröffentlichungsnummer: **0 129 190**
**B1**

(12) **EUROPÄISCHE PATENTSCHRIFT**

(45) Veröffentlichungstag der Patentschrift: **25.01.89**

(21) Anmeldenummer: **84106713.5**

(22) Anmeldetag: **13.06.84**

(51) Int. Cl.⁴: **C 09 B 67/20,** C 08 L 67/00, C 09 D 11/02 // C09B11/12

(54) **Pigmentpräparation, Verfahren zu ihrer Herstellung und ihre Verwendung.**

(30) Priorität: **18.06.83 DE 3321998**

(43) Veröffentlichungstag der Anmeldung: **27.12.84 Patentblatt 84/52**

(45) Bekanntmachung des Hinweises auf die Patenterteilung: **25.01.89 Patentblatt 89/4**

(84) Benannte Vertragsstaaten: **CH DE FR GB IT LI**

(56) Entgegenhaltungen:
**DE-A-2 757 815**
**DE-A-2 914 299**
**DE-A-3 045 679**
**FR-A-2 017 958**
**FR-A-2 245 743**

(73) Patentinhaber: **HOECHST AKTIENGESELLSCHAFT, Postfach 80 03 20, D-6230 Frankfurt am Main 80 (DE)**

(72) Erfinder: **Schneider, Manfred, Cuntzstrasse 1, D-6239 Eppstein/Taunus (DE)**
Erfinder: **Deubel, Reinhold, Dr., Geierfeld 64, D-6232 Bad Soden am Taunus (DE)**
Erfinder: **Zimmermann, Manfred, Dr., In der Tränk 29, D-6050 Offenbach/Main (DE)**

EP 0 129 190 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft gut dispergierbare farbstarke Pigmentpräparationen, enthaltend Aryl-pararosanilinsulfonsäure-Pigmente der allgemeinen Formel

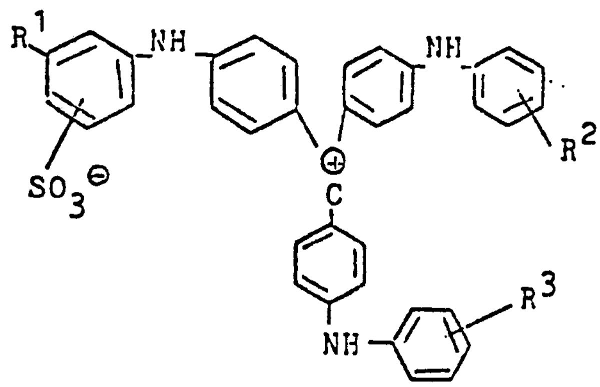

in welcher $R^1$, $R^2$ und $R^3$ Wasserstoff, Chlor oder Brom oder eine Alkyl- oder Alkoxy-Gruppe mit jeweils 1 - 3 Kohlenstoffatomen bedeuten.

Es ist bekannt, daß sich die wäßrigen Preßkuchen der Pigmente aus der Reihe der Arylpararosanilinsulfonsäuren bei einem einfachen Trocknungsprozeß auf Grund des ausgeprägten polaren Charakters zu besonders harten Agglomeraten zusammenlagern. Diese Agglomerate müssen beim Einarbeiten in die zu färbenden Medien, z. B. Druckfarben, Lacke oder Kunststoffe, mit einem erheblichen Aufwand an mechanischer Energie wieder zerlegt werden. Ist die Zerlegung nicht vollständig, was bei den heute üblichen, möglichst kurzen Dispergierzeiten nicht selten vorkommt, so kann es bei der Verarbeitung der Pigmente zu einer Vielzahl unterschiedlichster Störungen kommen. Abgesehen von zu farbschwachen oder stippigen Drucken kann es z. B. zu einer vorzetigen Zerstörung des Druckklischees kommen. Um diese Schwierigkeiten zu umgehen, werden Pigmente dieser Gruppe häufig als Flushpaste in speziellen Firnissen eingesetzt. Abgesehen von dem diskontinuierlich arbeitenden Flushverfahren und damit hohem apparativen Aufwand fallen die Flushpasten häufig nur mit relativ niedrigem Pigmentgehalt (meist zwischen 35 und 45 Gewichtsprozent) an. Außerdem bereitet der hohe Bindemittelanteil der Flushpasten Schwierigkeiten bei der Formulierung spezieller Druckfarbenrezepturen. Auch sind Flushpasten durch den jeweils verwendeten Flushfirnis in ihren möglichen Anwendungsgebieten eng begrenzt, da beim Herstellungsprozeß der hydrophile Charakter, die Flushneigung, die Pigmentbenetzung und andere Eigenschaften des Firnisses berücksichtigt werden müssen. Hierdurch wird eine Optimierung im Hinblick auf den Verwendungszweck sehr schwer. So können beispielsweise die in oxidativ trocknenden Firnissen geflushten Pigmente nicht für die Herstellung von Kohlepapieren oder Schreibbändern eingesetzt werden. Die Entleerung von Gebinden mit Flushpasten stellt beim Verarbeiter ein weiteres Problem dar, da die hochviskosen und zähen Pasten mit erheblichem mechanischen Aufwand und unter Verlusten entnommen werden müssen.

Bekannt sind Pulverpräparationen der Arylpararosanilinsulfonsäure-Pigmente mit Naturharzen oder modifizierten Naturharzen (vgl. Deutsche Patentschrift 1 769 912). Sie genügen nicht den heutigen Anforderungen der Druckfarbenindustrie bezüglich Dispergierbarkeit, Farbstärke, Verarbeitungsverhalten und Formulierungsspielraum der Druckfarbenrezepturen. Außerdem sind diese Naturharze in ihrer Lieferform feste harzartige Chips oder Brocken, die zwar im organischen Lösungsmittel relativ gut, aber im wäßrig-alkalischen Medium nur dann und nur mit hohem Zeitauewand unter Erwärmen löslich sind, wenn ihre Säurezahl größer als ca. 80 mg KOH/g ist. Bekannt sind weiterhin Präparationen mit Syntheseharzen (vgl. Deutsche Patentschrift 2 914 299). Diese führen durch ihren noch erheblichen Anteil an wasserunverträglichen Lösungsmitteln als Lösungsvrrmittler im betrieblichen Einsatz zu Geruchsbelästigungen. Weiterhin ist die Mitverwendung von oberflächenaktiven Substanzen erforderlich und beeinträchtigt die Substantivität der Harze dahingehend, daß ein merklicher Anteil des Präparierungsharzes nicht auf dem Pigment gebunden wird, sondern nach Isolierung des präparierten Pigmentes mit der Mutterlauge ins Abwasser gelangt. Außerdem wird durch den Anteil der oberflächenaktiven Substanz die Filtration der ausgefällten Pigmentpräparation erschwert.

Es wurde nun gefunden, daß man die Aryl-pararosanilinsulfonsäure-Pigmente in leicht dispergierbare Präparationen, z. B. Pigmentpulver hoher Farbstärke und weichem Korn mit wesentlich erweitertem Anwendungsbereich in den verschiedenen in der Druckfarbenindustrie üblichen Bindemitteln herstellen kann, wenn man als Präparierungsmittel wasserlösliche Polyesterharze mit einem Carboxyl/Hydroxyl-Verhältnis von 1: 2 bis 1 : 25 einsetzt.

Die Präparierung wird derart durchgeführt, daß man die Pigmente der genannten Formel unter Zusatz von Alkalien unter Erwärmen auf 50 bis 100°C, vorzugsweise 80 bis 100°C, in Wasser löst und aus der erhaltenen wäßrig-alkalischen Pigmentlösung nach Zugabe des in Wasser gelösten Polyesterharzes mit einer

Mineralsäure bei einem pH-Wert von 2 bis 5, vorzugsweise 2 bis 3,5, das präparierte Pigment ausfällt.

Zur Herstellung der wäßrig-alkalischen Pigmentlösung sind Natrium- bzw. Kaliumhydroxid am besten geeignet.

Durch den völligen Verzicht bzw. den sehr geringen Anteil an organischen Lösungsmitteln (er liegt weit unter der bisher bei wasserlöslichen Harzen zur Lösungsvermittlung benötigten Menge) wird die Geruchsbelästigung während der Pigmentpräparierung und die Belastung der Umwelt ganz erheblich vermindert.

Die erfindungsgemäß zu verwendenden Harztypen wurden bisher ausschließlich in Kombination mit wasserverträglichen Melaminharzen zur Herstellung von harten und elastischen Einbrennlacken eingesetzt und auch für diesen speziellen Zweck entwickelt.

Die Herstellung dieser Polyester ist in der Österreichischen Patentschrift 328 587 beschrieben. Sie entstehen, indem eine wasserunlösliche filmbildende Polyhydroxylverbindung (PH) mit einer Säurezahl von unter 10 mg KOH/g und einer Hydroxylzahl von 50 bis 650 mg KOH/g, und eine filmbildende Polycarboxylverbindung (PC) mit einer Säurezahl von 30 bis 280 mg KOH/g, in einem molaren Verhältnis von Carboxylgruppen zu Hydroxylgruppen von 1 : 2 bis 1 : 25, vorzugsweise 1 : 3 bis 1 : 10, gemischt oder partiell kondensiert wird und die Carboxylgruppen partiell oder vollständig mit Stickstoffbasen neutralisiert werden.

Geeignete filmbildende Polyhydroxylverbindungen (PH) sind, neben ihrem Gehalt an Hydroxylgruppen, durch die praktisch völlige Abwesenheit von Carboxylgruppen gekennzeichnet. Darunter soll verstanden werden, daß ihre Säurezahl unter 10 mg KOH/g liegt. Ihre Hydroxylzahl liegt zwischen 50 und 650 mg KOH/g.

Sie werden sehr leicht in bekannter Weise durch Kondensation von Polyolen im Überschuß, wie Monoäthylenglykol, Diäthylenglykol, Triäthylenglykol, Glycerin, Trimethylolpropan, Pentaerythrit, mit Polycarbonsäuren oder deren Anhydriden, wie Phthalsäure, Terephthalsäure, Trimellithsäure, Bernsteinsäure, Adipinsäure, Sebacinsäure usw., ggf. unter anteiliger Mitverwendung von Monocarbonsäuren mit 5 bis 20 Kohlenstoffatomen, hergestellt. Eine andere Synthesemöglichkeit besteht in der Umsetzung von überschüssigem Polyol mit Diisocyanaten, z. B. Toluylendiisocyanat oder Hexamethylendiisocyanat.

Gleichfalls geeignete PH erhält man durch Copolymerisation α,β-äthylenisch ungesättigter Verbindungen, die freie Hydroxylgruppen tragen, wie Äthylenglykolmonomethacrylsäureester, mit anderen copolymerisationsfähigen Vinylverbindungen, wie Estern der Acryl- bzw. Methacrylsäure von einwertigen Alkoholen, Amiden der Acryl- bzw. Methacrylsäure, Styrol, Vinyltoluol, und anderen Monomeren, soweit sie keine Carboxylgruppen tragen. Die Copolymerisate können auch geringe Mengen von Formaldehydkondensaten von Melamin, Harnstoff, Benzoguanamin, Phenolen, usw. einkondensiert enthalten.

Die filmbildende Polycarboxylverbindung (PC) kann als makromolekularer Emulgator aufgefaßt werden, der nach Trocknung des Überzuges als integrierender Bestandteil am Filmaufbau beteiligt ist. Geeignete PC mit Säurezahlen von 30 bis 280 mg KOH/g sind erhältlich durch Umsetzung hydroxylreicher Präkondensate mit Di- oder Tricarbonsäureanhydriden, z. B. aus hydroxylreichen Polyestern oder Polyurethanen mit Phthalsäureanhydrid oder Trimellithsäureanhydrid. Bevorzugte PC sind die Additionsprodukte von dienophilen Verbindungen, z. B. Maleinsäureanhydrid, an ungesättigte Verbindungen mit Molekulargewichten von über 500. Dazu zählen die Ester natürlicher ungesättigter Fettsäuren und Harzsäuren mit Polyalkoholen, z. B. Glycerin, Pentaerythrit, oder mit epoxydgruppentragenden Verbindungen, wie Bisphenol -A-Glycidyläthern. Eine andere geeignete ungesättigte, ebenfalls additionsfähige Gruppe von Verbindungen sind Polymerisate von Dienen (Butadien, Isopren). Bei allen derartigen Additionsprodukten wird die Anhydridgruppierung vor der Verwendung als PC entweder mit Wasser oder einwertigen Alkoholen aufgespalten. Darüber hinaus sind als PC auch die Copolymerisate der Acrylsäure bzw. Methacrylsäure mit anderen α,β-äthylenisch ungesättigten Monomeren, wie (Meth)acrylsäureestern, Styrol, Vinyltoluol verwendbar, bzw. auch selbstvernetzende Copolymerisate, wie sie in den österr. Patentschriften Nr. 291 571 und 299 543 beschrieben sind.

Die Carboxylgruppen der PC werden zumindest teilweise mit Stickstoffbasen wie Ammoniak, aliphatischen Aminen oder aliphatischen Alkanolaminen neutralisiert. Beispielsweise sind Diäthylamin, Triäthylamin, N,N'-Dimethyläthanolamin, Diäthanolamin u.a. geeignet.

Die Kombination von PH und PC unter Einhaltung des Carboxyl/Hydroxylverhältnisses von 1 : 2 bis 1 : 25 kann durch einfache Mischung erfolgen; fallweise kann zwischen den beiden Komponenten bei einer Temperatur von 80 bis 140°C eine partielle Kondensation vorgenommen werden. Diese Vorgangsweise ist dann angezeigt, wenn die Verträglichkeit (Homogenität des Kombinationsproduktes) der beiden Partner erhöht werden soll. Die Kondensation darf nicht so weit getrieben werden, daß die Löslichkeit in Wasser dadurch verloren geht. In den meisten Fällen genügt es, die Säurezahl im Kondensationsprodukt um 8 bis 15 Einheiten gegenüber der Ausgangsmischung zu reduzieren.

Bevorzugt verwendet werden ölfreie, polyglykolmodifizierte Polyester mit einem Carboxyl-/Hydroxyl-Gruppen-Verhältnis von 1 : 2 bis 1 : 25, vorzugsweise 1 : 3 bis 1 : 10. Diese Produkte sind im Handel erhältlich.

Die Lieferform der erfindungsgemäß zu verwendenden Polyesterharze ist eine 35 - 85 %-ige Lösung in Wasser. Sie kann je nach Viskosität mit Wasser weiterverdünnt werden. Hierdurch ist eine gute Dosierbarkeit bei der Präparierung des Pigmentes gewährleistet, wodurch ein störungsfreies Arbeiten im kontinuierlichen Betrieb ermöglicht wird. Es ist z. B. möglich, die wäßrige Polyesterlösung in den kontinuierlichen Produktstrom mittels einer Dosierpumpe einzuschleusen.

Die eingesetzte Polyesterharzmenge beträgt je nach Pigment und vorgesehenem Einsatzgebiet der Präparation 1 bis 25 Gewichtsprozent, vorzugsweise 2 bis 15 Gewichtsprozent, bezogen auf das Gewicht des trockenen Ausgangspigmentes. Nach dem Trocknen der feuchten, abgepreßten Pigmentpräparation erhält man ein Produkt mit weichem Korn, welches problemlos mahlbar ist und nicht zum Verkleben neigt.

Die Polyesterharze ziehen bei der erfindungsgemäßen Präparierungsart nahezu ausschließlich auf das zu präparierende Pigment auf und die hergestellten Pigmentpräparationen weisen z. B. nach Trocknung bei ca. 80° C eine hervorragende Dispergierbarkeit in den verschiedenen praxisüblichen Druckfarbenbindemitteln auf.

Die Pigmentpräparationen eignen sich daher insbesondere zur Verwendung in Druckfarben, Durchschlag- bzw. Durchschreibpapieren sowie Farbbändern.

Die erfindungsgemäßen Pigmentpräparationen können außerordentlich leicht mit den in der Druckfarbenindustrie gebräuchlichen Dispergieraggregaten dispergiert werden. Die damit hergestellten Druckfarben lassen sich einwandfrei verdrucken. Sie sind in den organisch formulierten Buch-Offsetdruckfirnissen gut dispergierbar und zeigen keinerlei Neigung zum Pelzen und Tonen; sie sind auch in den üblichen wäßrigen Maleinat- und Acrylatbindemitteln des wäßrigen Flexodruckes ohne Flockulationsneigung voll verträglich und lagerstabil und liefern farbstarke, glänzende Drucke mit gutem Schönungsverhalten. Die erfindungsgemäßen Präparationen in Pulverform sind etwa doppelt so farbstark wie Flushpasten, so daß bei der Formulierung von Druckfarben ein größerer Spielraum für eigenschaftsverbessernde Zusätze verbleibt. Durch den geringen Harzgehalt und die dadurch geringe Viskositätsbeeinflussung bei der Formulierung von Druckfarben sind die Pulverpräparate vielseitiger einsetzbar.

Die erfindungsgemäßen Präparationen sind unbeschränkt lagerfähig, während Flushpasten vor allem durch Erwärmen eindicken und daher nur begrenzte Zeit gelagert werden können. Sie sind besser dosierbar, lassen sich quantitativ aus den Gebinden entnehmen und können beispielsweise von einem Vorratsbunker zum Verarbeitungsgerät pneumatisch transportiert und automatisch dosiert werden.

Sollten die erfindungsgemäßen Pigmentpräparationen zur Herstellung spezieller Flushpasten eingesetzt werden, so läßt sich das Fließverhalten und die Zügigkeit der fertigen Pasten durch den Harzanteil in weiten Grenzen beeinflussen.

Die Bereitschaft der präparierten Preßkuchen zum Flushen wird deutlich erhöht und kann durch die gewählte Harzmenge auf die verwendeten Flushmittel abgestimmt werden. Die Wasserabspaltung verläuft vollständiger, wodurch die anschließende Trocknungsphase verkürzt werden kann.

In den folgenden Beispielen wird die Erfindung näher erläutert.

**Beispiel 1**

408 Gewichtsteile eines wasserfeuchten Preßkuchens, enthaltend 24,5 Gewichtsprozent der Triphenylpararosanilinmonosulfonsäure der Formel

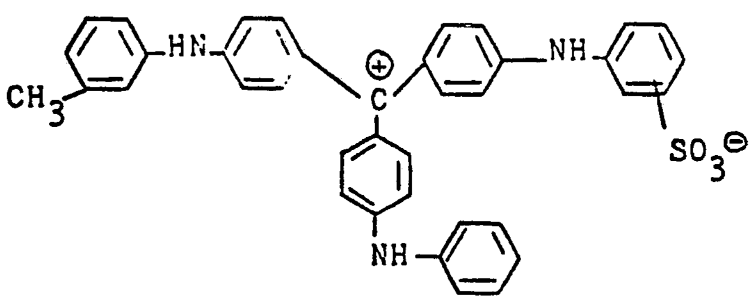

,

wurden nach Zugabe von 2000 Gewichtsteilen Wasser unter Rühren angeschlämmt. Nach Zugabe von 19,5 Gewichtsteilen Nariumhydroxid wurde die Mischung auf 90 - 100° C erhitzt, wobei sich das Pigment vollständig löste.

In die heiße Pigmentlösung gab man 16 Gewichtsteile eines neutralisierten Polyglykolmodifizierten ölfreien Polyesters mit einem Carboxyl/Hydroxyl Verhältnis von 1 : 3,8 und einer SZ von ca. 45 mg KOH/g vor der Neutralisation mit einer Stichstoffbase. Die Mischung wurde 10 Minuten gerührt und anschließend durch Zugabe von 165 Gewichtsteilen einer 17 prozentigen Schwefelsäure das präparierte Pigment ausgefällt. Die Pigmentpräparation wurde abgesaugt, salzfrei gewaschen und bei 70 - 80° C 24 Stunden im Umluftschrank getrocknet. Die Mutterlauge hatte einen pH-Wert von 2,3 und war schwach rosa gefärbt. Man erhielt 111,5 Gewichtsteile eines 89,7 gewichtsprozentigen blauen Pigmentpräparates. Das Pigmentpräparat wurde gemahlen und ließ sich sehr gut mit geringem Dispergieraufwand zu farbstarken Druckfarben sowohl in einem Buch-Offsetfirnis als auch in einem Flexofirnis einarbeiten.

**Beispiel 2**

Man verfuhr wie in Beispiel 1 beschrieben, isolierte aber den feuchten, salzfrei gewaschenen Preßkuchen. Es resultierten 619 Gewichtsteile wasserfeuchte Pigmentpräparation. Dieser wasserfeuchte Preßkuchen ließ sich durch Zugabe von nur 3 g eines Dinaphthalinmethansulfonates unter Rühren zu einer gut fließfähigen Suspension verflüssigen und mit einem Zerstäubungstrockner bei einer Eingangstemperatur von 220 - 230°C und einer Ausgangstemperatur von 90 - 95°C zu einem rieselfähigen Pulver trocknen. Das Pulver ließ sich sehr gut mit geringem Dispergieraufwand zu farbstarken, stippenfreien Druckfarben verarbeiten.

**Beispiel 3**

408 Gewichtsteile eines feuchten Preßkuchens, enthaltend 24,5 Gewichtsprozent der Triphenylpararosanilinmonosulfonsäure der Formel

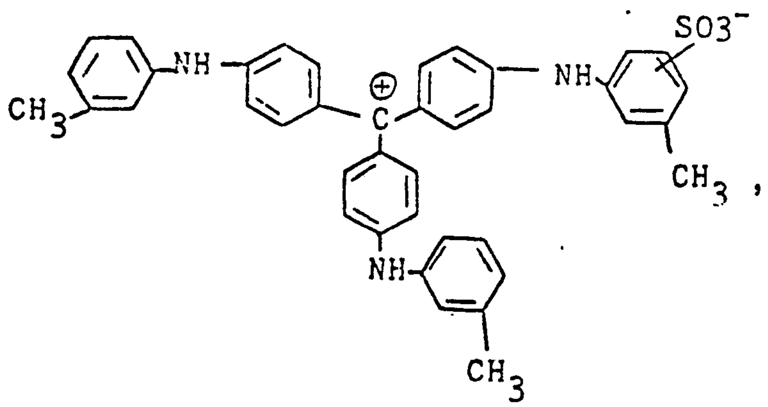

wurden nach Zugabe von 1900 Gewichtsteilen Wasser unter Rühren angeschlämmt. Nach Zugabe von 21 Gewichtsteilen Natriumhydroxid wurde die Mischung auf 90 - 100°C erhitzt, wobei das Pigment vollständig in Lösung ging. Die heiße Pigmentlösung wurde mit 45 g einer 40 gewichtsprozentigen, wäßrigen Lösung eines fettsäuremodifizierten, wasserlöslichen Polyesterharz mit einem Carboxyl/Hydroxyl-Gruppen -Verhältnis von 1 : 3,4, einer Öllänge von ca. 47 Gewichtsprozent und einer Säurezahl von 50 mg KOH/G vor der Neutralisation mit einer Stickstoffbase versetzt. Die Mischung wurde 10 Minuten gerührt und anschließend durch Zugabe von 170 Gewichtsteilen einer 17 %-igen Schwefelsäure das präparierte Pigment ausgefällt. Die Präparation wurde abgesaugt, salzfrei gewaschen und bei 70 - 80°C 24 Stunden im Umlufttrockenschrank getrocknet.

Es resultierten 117 Gewichtsteile eines 85,4 gewichtsprozentigen blauen Pigmentpulvers mit grüner Farbnuance, welches sich sehr leicht zu farbstarken stippenfreien Druckfarben verarbeiten ließ.

**Beispiel 4**

408 Gewichtsteile eines feuchten Preßkuchens, enthaltend 24,5 Gewichtsprozent der Triphenylparaosanilinmonosulfonsäure der Formel

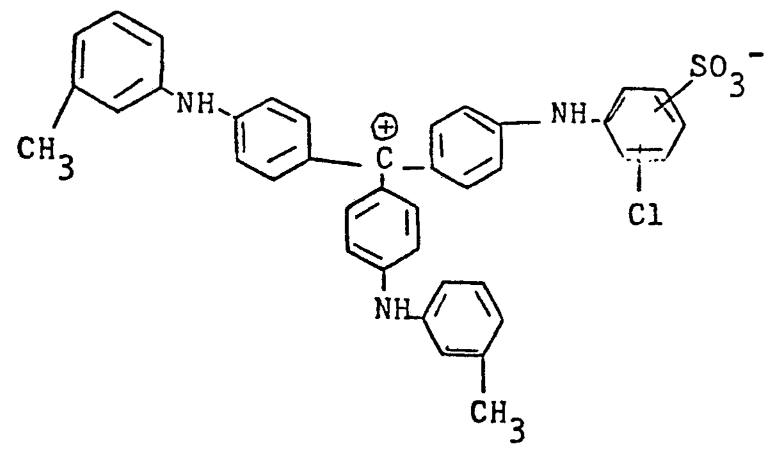

,

wurden nach Zugabe von 2000 Gewichtsteilen Wasser unter Rühren angeschlämmt. Nach Zugabe von 20 Gewichtsteilen Natriumhydroxid wurde die Mischung auf 90 - 100° C erhitzt, wobei sich das Pigment vollständig löste. In die heiße Pigmentlösung gab man 4 Gewichtsteile des in Beispiel 1 beschriebenen Polyesters, rührte 10 Minuten nach und fällte durch Zugabe von 170 Gewichtsteilen einer 17-prozen-tigen Schwefelsäure das präparierte Pigment aus. Nach Filtration resultierten 630 Gewichtsteile feuchter präparierter Pigment-Preßkuchen. Dieser Preßkuchen ließ sich portionsweise mit 130 Gewichtsteilen einer Leinölflushpaste ohne Schwierigkeiten "flushen". Die Wasserabspaltung betrug 92 Gewichtsprozent. Nach Trocknung der Restwassermenge im Vakuum erhielt man eine ca. 45 gewichtsprozentige Flushpaste mit guter Zügigkeit und hervorragender Feinverteilung und Farbstärke.

**Patentansprüche**

1. Pigmentpräparation auf der Basis eines Aryl-pararosanilinsulfonsäure-Pigments der Formel

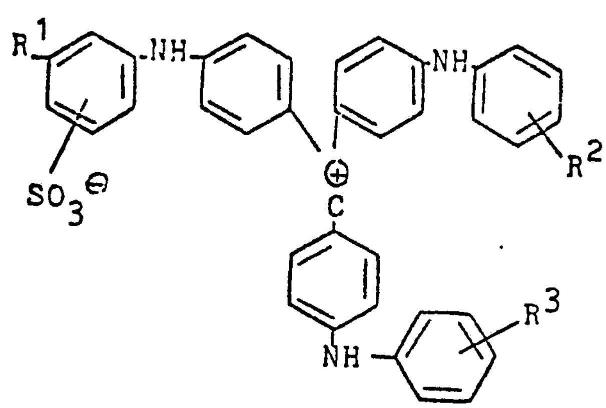

in welcher $R^1$, $R^2$ und $R^3$ Wasserstoff, Chlor oder Brom, oder eine Alkyl- oder Alkoxy-Gruppe mit jeweils 1 bis 3 Kohlenstoffatomen bedeuten, und eines wasserlöslichen Harzes, dadurch gekennzeichnet, daß das Harz hergestellt worden ist, indem eine wasserunlösliche filmbildende Polyhydroxylverbindung (PH) mit einer Säurezahl von unter 10 mg KOH/g und einer Hydroxylzahl von 50 bis 650 mg KOH/g und eine filmbildende Polycarboxylverbindung (PC) mit einer Säurezahl von 30 bis 280 mg KOH/g in einem molaren Verhältnis von Carboxylgruppen zu Hydroxylgruppen von 1 : 2 bis 1 : 25 gemischt oder partiell kondensiert wurden, und die Carboxylgruppen partiell oder vollständig mit Stickstoffbasen neutralisiert wurden.

2. Pigmentpräparation gemäß Anspruch 1, dadurch gekennzeichnet, daß das verwendete Polyesterharz frei von gesättigten oder ungesättigten Fettsäuren ist.

3. Pigmentpräparation nach Anspruch 1 oder 2, dadurch gekennzeichnet, daß sie 1 bis 25 Gewichtsprozent Polyesterharz, bezogen auf das Gewicht des trockenen Pigments, enthält.

4. Pigmentpräparation nach Anspruch 3, dadurch gekennzeichnet, daß sie 2 bis 15 Gewichtsprozent Polyesterharz bezogen auf das Gewicht des trockenen Pigments, enthält.

5. Verfahren zur Herstellung der Pigmentpräparation nach Anspruch 1, dadurch gekennzeichnet, daß man

das Pigment im alkalisch wäßrigen Medium unter Erwärmen auf 50 bis 100°C löst, das wasserlösliche Polyesterharz zugibt und die Pigmentpräparation durch Zugabe einer Mineralsäure bei pH 2 bis 5 ausfällt.

6. Verfahren nach Anspruch 5, dadurch gekennzeichnet, daß die Pigmentpräparation bei pH 2 bis 3,5 ausgefällt wird.

7. Verfahren nach Anspruch 5 oder 6, dadurch gekennzeichnet, daß das Pigment unter Erwärmen auf 80 bis 100°C im alkalisch wäßrigen Medium gelöst wird.

8. Verwendung der Pigmentpräparation nach mindestens einem der Ansprüche 1 bis 4 in Druckfarben, Durchschreibepapieren und Farbbändern.

**Claims**

1. A pigment formulation based on an arylpararosanilinesulfonic acid pigment of the formula

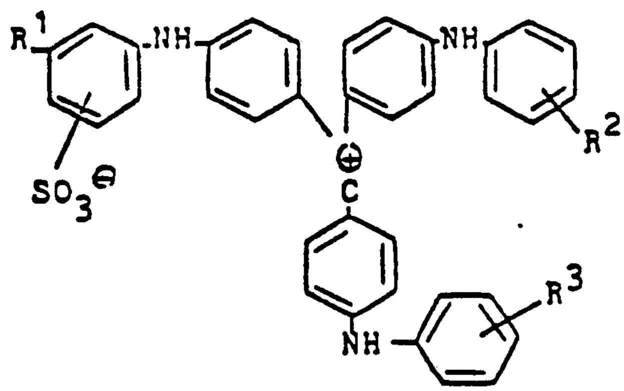

in which $R^1$, $R^2$ and $R^3$ each denote hydrogen, chlorine, bromine or an alkyl or alkoxy group of 1 - 3 carbon atoms in either case, and a water-soluble resin, wherein the resin has been prepared by mixing or partially condensing a water -insoluble film-forming polyhydroxyl compound (PH) having an acid number of less than 10 mg of KOH/g and a hydroxyl number of 50 to 650 mg of KOH/g and a film-forming polycarboxyl compound (PC) having an acid number of 30 to 280 mg of KOH/g in a molar ratio of carboxyl groups to hydroxyl groups of 1 : 2 to 1 : 25, and partially or completely neutralizing the carboxyl groups with nitrogen bases.

2. A pigment formulation as claimed in claim 1, wherein the polyester resin used is free of saturated or unsaturated fatty acids.

3. A pigment formulation as claimed in claim 1 or 2, which contains 1 to 25 percent by weight of polyester resin, based on the weight of the dry pigment.

4. A pigment formulation as claimed in claim 3, which contains 2 to 15 percent by weight of polyester resin, based on the weight of the dry pigment.

5. A process for preparing a pigment formulation as claimed in claim 4, which comprises dissolving the pigment in the alkaline aqueous medium by heating to 50 to 100°C, adding the water-soluble polyester resin, and precipitating the pigment formulation at pH 2 to 5 by adding a mineral acid.

6. The process as claimed in claim 5, wherein the pigment formulation is precipitated at pH 2 to 3.5.

7. The process as claimed in claim 5 or 6, wherein the pigment is dissolved in the alkaline aqueous medium by heating to 80 to 100°C.

8. Use of a pigment formulation as claimed at least in one of claims 1 to 4, in printing inks, copying papers and typewriter ribbons.

**Revendications**

1. Composition de pigment à base d'un pigment du type acide aryl-pararosaniline-sulfonique de formule

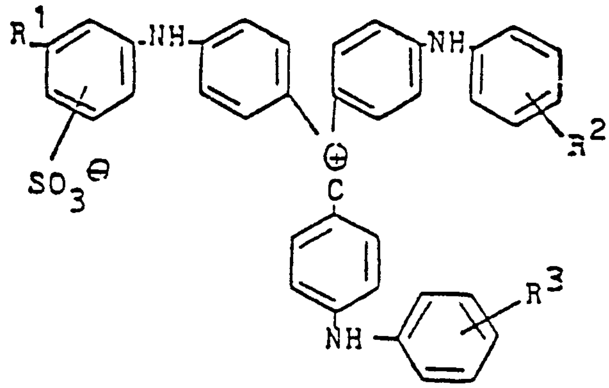

dans laquelle $R^1$, $R^2$ et $R^3$ représentent chacun un atome d'hydrogène ou de chlore ou de brome, ou un groupe alkyle ou alcoxy ayant chacun 1 à 3 atomes de carbone, et d'une résine hydrosoluble, composition caractérisée en ce que la résine a été préparée par mélangeage ou condensation partielle d'un composé polyhydroxylé (PH) filmogène, insoluble dans l'eau, ayant un indice d'acide inférieur à 10 mg de KOH/g et un indice d'hydroxyle de 50 à 650 mg de KOH/g, et d'un composé polycarboxylé (PC) filmogène, ayant un indice d'acide de 30 à 280 mg de KOH/g, selon un rapport molaire des groupes carboxyles à groupes hydroxyles de 1 : 2 à 1 : 25, puis neutralisation, partielle ou complète, des groupes hydroxyles par des bases azotées.

2. Composition de pigment selon la revendication 1, caractérisée en ce que la résine de polyester que l'on utilise est dépourvue d'acides gras saturés ou insaturés.

3. Composition de pigment selon la revendication 1 ou 2, caractérisée en ce qu'elle contient 1 à 25 % en poids de la résine de polyester, par rapport au poids du pigment sec.

4. Composition de pigment selon la revendication 3, caractérisée en ce qu'elle contient 2 à 15 % en poids de la résine de polyester, par rapport au poids du pigment sec.

5. Procédé pour préparer la composition de pigment selon la revendication 1, caractérisé en ce qu'on dissout le pigment dans un milieu aqueux alcalin, par chauffage jusqu'à 50 à 100°C , on ajoute la résine de polyester hydrosoluble et l'on précipite la composition de pigment, à pH 2 à 5, par addition d'un acide minéral.

6. Procédé selon la revendication 5, caractérisé en ce qu'on précipite la composition de pigment à un pH de 2 à 3,5.

7. Procédé selon la revendication 5 ou 6, caractérisé en ce qu'on dissout le pigment par chauffage jusqu'à 80 à 100°C dans un milieu aque x alcalin.

8. Utilisation de la composition de pigment selon l'une au moins des revendications 1 à 4, dans des encres d'impression, des papiers pour copies et des rubans encreurs pour machines à écrire.